# EUROPEAN PATENT APPLICATION

(11) **EP 2 018 017 A2**
(43) Date of publication of application: **21.01.2009**
(21) Application number: 08011605.6
(22) Date of filing: 26.06.2008
(51) Int. Cl.: H04L 29/06

(54) **Method and system for controlling a proxy device over a network by a remote device**

(30) Priority: 20.07.2007 US 951006 P; 02.10.2007 US 865804
(71) Applicant: Broadcom Corporation, Irvine, CA 92617 (US)
(72) Inventor: Walley, John, Ladera Ranch CA 92694 (US); Buer, Mark, Gilbert AZ 85296 (US); Maclnnis, Alexander, 48104 Ann Arbor (US); Behzad, Arya, Poway CA 92064 (US); Karaoguz, Jeyhan, Irvine CA 92606 (US); Quigley, Thomas, 28734 Franklin (US)
(74) Representative: Jehle, Volker Armin

(57) **Abstract**

Methods and systems for wireless communication are disclosed and may include generating via a wireless mobile communication device (WMCD), persistent remote agents (PRAs) that may be enabled to perform one or more tasks. The PRAs may be communicated to remote devices to perform the tasks. The preferences of a user of the WMCD may be incorporated into the PRAs. The result of the tasks may be received by the WMCD from the remote devices. The PRAs may be communicated from the WMCD to the remote devices via one of a plurality of wireless protocols. At least one additional PRA may be spawned from the PRAs at the remote devices, and may be communicated to additional remote devices. The tasks may be performed by the PRAs periodically. The WMCD may communicate a message to the remote devices to initiate performance of the tasks by the PRAs.

## Description

### CROSS-REFERENCE TO RELATED APPLICATIONS/INCORPORATION BY REFERENCE

This patent application makes reference to, claims priority to and claims benefit from United States Provisional Patent Application Serial No. 60/951,006 filed on July 20, 2007.

### FEDERALLY SPONSORED RESEARCH OR DEVELOPMENT

[Not Applicable]

### [MICROFICHE/COPYRIGHT REFERENCE]

[Not Applicable]

### FIELD OF THE INVENTION

Certain embodiments of the invention relate to wireless communication. More specifically, certain embodiments of the invention relate to a method and system for controlling a proxy device over a network by a remote device.

### BACKGROUND OF THE INVENTION

The field of wireless communication has seen dramatic growth the last few years. In today's world, most people use their wireless devices, be it cellular phones, PDA's, laptops, and/or other devices, for various purposes, business and personal, on a constant and daily basis. Society is truly becoming a wireless one. Many wireless solutions have been introduced, and have made tremendous strides into everyday life.

For example, the use of Wireless Personal Area Networks (WPAN) has been gaining popularity in a great number of applications because of the flexibility and convenience in connectivity they provide. WPAN systems generally replace cumbersome cabling and/or wiring used to connect peripheral devices and/or mobile terminals by providing short distance wireless links that allow connectivity within very narrow spatial limits (typically, a 10-meter range). WPAN may be based on standardized technologies, for example Class 2 Bluetooth (BT) technology. While WPAN may be very beneficial for certain applications, other applications may require larger service areas and/or capabilities.

To satisfy such needs, other technologies have been developed to provide greater wireless service. Wireless Local Area Networks (WLAN) systems may operate within a 100-meter range, for example. In contrast to the WPAN systems, WLAN provide connectivity to devices that are located within a slightly larger geographical area, such as the area covered by a building or a campus, for example. WLAN systems are generally based on specific standards, for example IEEE 802.11 standard specifications, and typically operate within a 100-meter range, and are generally utilized to supplement the communication capacity provided by traditional wired Local Area Networks (LANs) installed in the same geographic area as the WLAN system.

Other forms of wireless solutions have evolved from traditional land-based communication technologies. For instance, cellular phones have become just about an absolute necessity in today's world. While cellular technology was merely intended to add an element of mobility to the traditional telephony service, this technology has grown beyond that initial purpose. Many modern cellular technologies, including such technologies as GSM/GPRS, UMTS, and CDMA2000 may incorporate substantial data capabilities. Most of today's cellular services may include such features as text messaging, video streaming, web browsing...etc.

Some mobile devices have the capability to utilize one or more wireless technologies. For instance, WLAN systems may be operated in conjunction with WPAN systems to provide users with an enhanced overall functionality. For example, Bluetooth technology may be utilized to connect a laptop computer or a handheld wireless terminal to a peripheral device, such as a keyboard, mouse, headphone, and/or printer, while the laptop computer or the handheld wireless terminal may also be connected to a campus-wide WLAN network through an access point (AP) located within the building. Also, cellular technology may allow use of the mobile phone as a form of wireless modem that allows connecting a laptop, for example, to the internet via a cellular network.

Just as with other electronic devices, mobile communication devices have seen substantial growth in performance capability and speed. As such, they are finding applications in areas not predicted when first introduced to give users mobile telephony. They may comprise mini computers, multimedia players, GPS devices and many other applications, for example. As more and more applications are added to wireless devices, the need for integration of services becomes greater.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for controlling a proxy device over a network by a remote device, substantially as shown in and/or described in connection with at least one of the figures, as set forth more completely in the claims.

According to an aspect, a method for wireless communication comprises:
generating via a wireless mobile communication device, one or more persistent remote agents that are enabled to perform one or more tasks; and
communicating said generated one or more persistent remote agents to one or more remote devices to perform said one or more tasks.

Advantageously, the method comprises incorporating preferences of a user of said wireless mobile communication device into said generated one or more persistent remote agents.

Advantageously, the method comprises storing said preferences on said wireless mobile communication device.

Advantageously, the method comprises storing said preferences externally to said wireless mobile communication device.

Advantageously, the method comprises receiving at said wireless mobile communication device, a result of said one or more tasks from said one or more remote devices.

Advantageously, the method comprises communicating said one or more persistent remote agents from said wireless mobile communication device to said one or more remote devices via one of a plurality of wireless protocols.

Advantageously, the method comprises spawning at said one or more remote devices, at least one additional persistent remote agents from said one or more generated persistent remote agent.

Advantageously, said spawned at least one additional persistent remote agent are communicated to one or more additional remote devices.

Advantageously, said at least one additional persistent remote agent performs one or more additional tasks at said one or more additional remote devices.

Advantageously, the method comprises receiving by said wireless mobile communication device, additional results for said one or more additional tasks from said at least one additional persistent remote agent.

Advantageously, the method comprises receiving by said one or more remote devices, additional results for said one or more additional tasks from said at least one additional persistent remote agent.

Advantageously, the method comprises receiving by said wireless mobile communication device, said additional results for said one or more additional tasks from said at least one additional persistent remote agent at said one or more remote devices.

Advantageously, said one or more tasks is performed by said generated one or more persistent remote agents periodically.

Advantageously, the method comprises communicating a message from said wireless mobile communication device to said one or more remote devices to initiate performance of said one or more tasks by said generated one or more persistent remote agents.

Advantageously, the method comprises determining whether said one or more remote devices comprises available resources for handling execution of said generated one or more persistent remote agents.

According to an aspect, a system for wireless communication comprises:
one or more processors in a wireless mobile communication device that enable generation of one or more persistent remote agents that are enabled to perform one or more tasks; and
said one or more processors enable communication of said generated one or more persistent remote agents to one or more remote devices to perform said one or more tasks.

Advantageously, said one or more processors enable incorporation of preferences of a user of said wireless mobile communication device into said generated one or more persistent remote agents.

Advantageously, said one or more processors enable storage of said preferences on said wireless mobile communication device.

Advantageously, said one or more processors enable storage of said preferences externally to said wireless mobile communication device.

Advantageously, said one or more processors enable receiving at said wireless mobile communication device, a result of said one or more tasks from said one or more remote devices.

Advantageously, said one or more processors enable communication of said one or more persistent remote agents from said wireless mobile communication device to said one or more remote devices via one of a plurality of wireless protocols.

Advantageously, said one or more processors enable spawning at said one or more remote devices, at least one additional persistent remote agents from said one or more generated persistent remote agent.

Advantageously, said spawned at least one additional persistent remote agent are communicated to one or more additional remote devices.

Advantageously, said at least one additional persistent remote agent performs one or more additional tasks at said one or more additional remote devices.

Advantageously, said one or more processors enable receiving by said wireless mobile communication device, additional results for said one or more additional tasks from said at least one additional persistent remote agent.

Advantageously, said one or more processors enable receiving by said one or more remote devices, additional results for said one or more additional tasks from said at least one additional persistent remote agent.

Advantageously, said one or more processors enable receiving by said wireless mobile communication device, said additional results for said one or more additional tasks from said at least one additional persistent remote agent at said one or more remote devices.

Advantageously, said one or more tasks is performed by said generated one or more persistent remote agents periodically.

Advantageously, said one or more processors enable communication of a message from said wireless mobile communication device to said one or more remote devices to initiate performance of said one or more tasks by said generated one or more persistent remote agents.

Advantageously, said one or more processors enable determination of whether said one or more remote devices comprises available resources for handling execution of said generated one or more persistent remote agents.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram of an exemplary WLAN infrastructure network comprising basic service sets (BSSs) integrated using a common distribution system (DS), in accordance with an embodiment of the invention.

FIG. 2 is a block diagram of exemplary utilization of persistent remote agents, in accordance with an embodiment of the invention.

FIG. 3 is a block diagram of exemplary utilization of persistent remote agents for multiple users, in accordance with an embodiment of the invention.

FIG. 4 is a block diagram of an exemplary generation of multiple persistent remote agents, in accordance with an embodiment of the invention.

FIG. 5 is a block diagram of an exemplary utilization of persistent remote agents for auto emergency service, in accordance with an embodiment of the invention.

FIG. 6 is a flow diagram illustrating an exemplary persistent remote agent operation, in accordance with an embodiment if the invention.

### DETAILED DESCRIPTION OF THE INVENTION

Certain aspects of the invention may be found in a method and system for controlling a proxy device over a network by a remote device. Exemplary aspects of the invention may comprise generating via a wireless mobile communication device (WMCD), one or more persistent remote agents (PRAs) that are enabled to perform one or more tasks. The PRAs may be communicated to one or more remote devices to perform the one or more tasks. The preferences of a user of the WMCD may be incorporated into the PRAs, and may be stored internally or externally to the WMCD. The result of the tasks may be received by the WMCD from the one or more remote devices. The PRAs may be communicated from the WMCD to the one or more remote devices via one of a plurality of wireless protocols. At least one additional PRA may be spawned from the PRAs at the one or more remote devices, and may be communicated to one or more additional remote devices. At least one additional PRA may perform one or more additional tasks at the one or more additional remote devices. The WMCD may receive additional results for the additional tasks from the additional PRAs. The remote devices may receive additional results for the additional tasks from the additional PRAs. The WMCD may receive the additional results for the additional tasks from the additional PRAs at the remote devices. The tasks may be performed by the PRAs periodically. The WMCD may communicate a message to the remote devices to initiate performance of the tasks by the PRAs. The PRAs may determine whether the remote devices comprise available resources for handling execution of the PRAs.

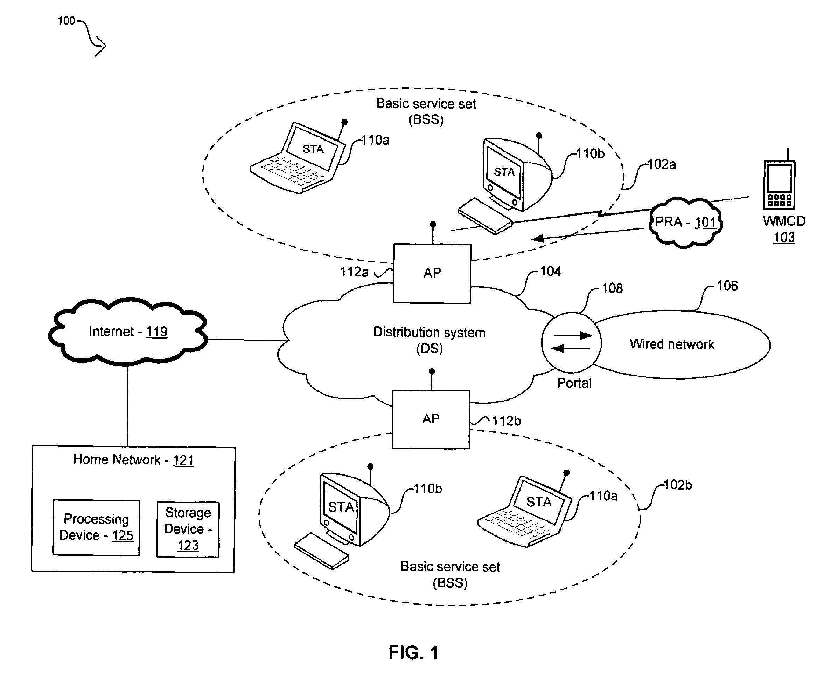

FIG. 1 is a block diagram of an exemplary WLAN infrastructure network comprising basic service sets (BSSs) integrated using a common distribution system (DS), in accordance with an embodiment of the invention. Referring to FIG. 1, the exemplary WLAN infrastructure network 100 shown may comprise a wireless mobile communication device (WMCD) 103, a first BSS 102a, a second BSS 102b, a DS 104, a wired network 106, a portal 108, a first access point (AP) 112a, a second AP 102b, a home network 121, the Internet 119 and a plurality of WLAN stations 110a and 110b.

The PRA 101 may comprise software code that may enable operations to be performed by a remote resource, such as the processing device 125 in the home network 121, and may determine whether the remote resource comprises sufficient resources for handling the execution of the PRA 101. The WMCD 103 may comprise suitable circuitry, logic and/or code that may be enabled to provide wireless communication between a user and networked resources. In an exemplary embodiment of the invention, the WMCD 103 may comprise a cellular phone that may be capable of communicating utilizing multiple wireless protocols such as cellular, WLAN, WiMax, Bluetooth, RFID and NFC, for example.

The BSSs 102a and 102b may represent a fundamental building block of the IEEE 802.11 (WLAN) architecture and may be defined as a group of stations that are under the direct control of a single coordination function. The geographical area covered by a BSS is known as the basic service area (BSA). The DS 104 may be utilized to integrate the BSSs 102a and 102b and may comprise suitable hardware, logic, circuitry, and/or code that may be adapted to operate as a backbone network that is responsible for Medium Access Control (MAC) level transport in the WLAN infrastructure network 100. The DS 104, as specified by the IEEE 802.11 standard, may be implementation independent. For example, the DS 104 may be implemented utilizing IEEE 802.3 Ethernet Local Area Network (LAN), IEEE 802.4 token bus LAN, IEEE 802.5 token ring LAN, Fiber Distributed Data Interface (FDDI) Metropolitan Area Network (MAN), or another IEEE 802.11 wireless medium. The DS 104 may be implemented utilizing the same physical medium as either the first BSS 102a or the second BSS 102b. However, the DS 104 may be logically different from the BSSs and may be utilized only to transfer packets between the BSSs and/or to transfer packets between the BSSs and the wired network 106.

The wired network 106 may comprise suitable hardware, logic, circuitry, and/or code that may be adapted to provide wired networking operations. The wired network 106 may be accessed from the WLAN infrastructure network 100 via the portal 108. The portal 108 may comprise suitable hardware, logic, circuitry, and/or code and may be adapted to integrate the WLAN infrastructure network 100 with non-IEEE 802.11 networks. Moreover, the portal 108 may also be adapted to perform the functional operations of a bridge, such as range extension and/or translation between different frame formats, in order to integrate the WLAN infrastructure network 100 with IEEE 802.11-based networks.

The APs 112a and 112b may comprise suitable hardware, logic, circuitry, and/or code that may be adapted to support range extension of the WLAN infrastructure network 100 by providing the integration points necessary for network connectivity between the BSSs. The WLAN stations 110a and 110b correspond to WLAN-enabled terminals that comprise suitable hardware, logic, circuitry, and/or code that may be adapted to provide connectivity to the WLAN infrastructure network 100 via the APs. The WLAN station 110a shown is a laptop computer and may correspond to a mobile station or terminal within the BSS and the WLAN station 110b shown is a desktop computer and may correspond to a fixed or stationary terminal within the BSS. Each BSS may comprise a plurality of mobile or fixed stations and may not be limited to the exemplary implementation shown in FIG. 1A.

The home network 121 may comprise a WMCD user's home network, and may comprise storage devices, such as the storage device 123, and computing devices, such as the processing device 125. Resources such as user software and/or hardware that a user may wish to utilize to perform specific tasks from remote networks may be in the home network 121. In addition, user preferences may be stored in the home network 121, and may comprise access privileges to networked resources, user calendars and credit card information, for example.

A wireless mobile communication device (WMCD) user may wish to utilize resources within a BSS to perform a desired task, so as not to use valuable processing power and wireless communication bandwidth of the WMCD. A WMCD 103 may be utilized to generate a PRA 101, which may be communicated to remote resources such as a server on a home network, to perform the desired task. The PRA 101 may comprise software code generated by the WMCD 103 that may be communicated to a resource that may have appropriate processing speed, storage space, and/or software as determined by the specific task to be performed. In another embodiment of the invention, the PRA 101 may perform a specific task on a regular basis, as opposed to a single execution. For example, a PRA 101 may be generated to monitor a particular entity, such as a sports team or athlete, and generate statistics on the team or athlete and report these statistics to a user on a periodic basis.

In another embodiment of the invention, the PRA 101 may be enabled to monitor the location of other users, such as family members, for example, and may provide information to the user of the WMCD 103 when a person moves to a location near the WMCD 103, or may indicate to the user when a person moves out of the area, for example. Similarly, the PRA 101 may be enabled to communicate with multiple WMCDs, such as with members of a family, for example.

The PRA 101 may also be enabled to generate or spawn multiple PRAs which may be dispatched to one or more remote devices for execution thereon. Additionally, a PRA that is dispatched to a remote device may also be enabled to generate or spawn multiple PRAs which may be dispatched to one or more remote devices for execution thereon.

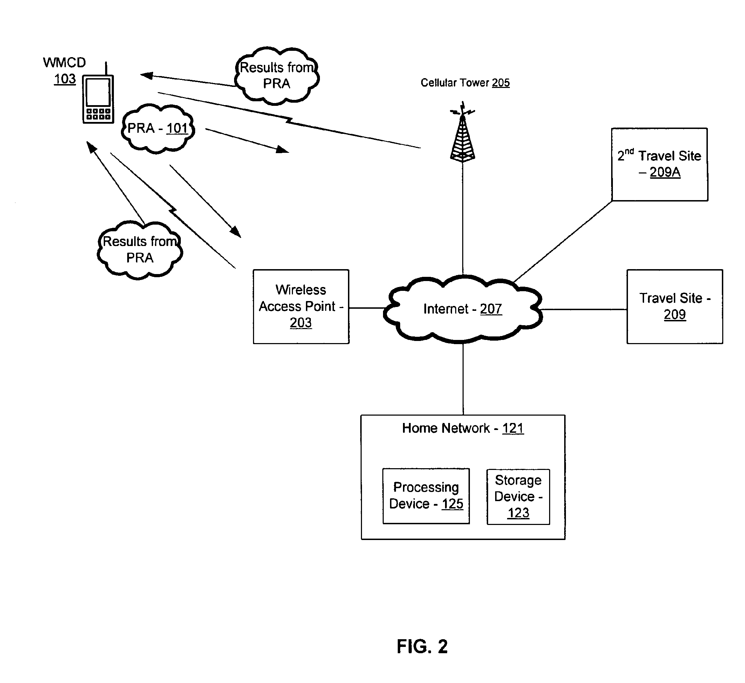

FIG. 2 is a block diagram of exemplary utilization of persistent remote agents, in accordance with an embodiment of the invention. Referring to FIG. 2, there is shown a PRA 101, the WMCD 103, the home network 121, a wireless access point 203, a cellular tower 205, the Internet 207, a travel website server 209 and a 2^{nd} travel website server 209A.

The PRA 101 may comprise software code that may enable operations to be performed by a remote resource, such as the processing device 125 in the home network 121. The WMCD 103 and the home network 121 may be as described with respect to FIG. 1. The wireless access point 203 may comprise suitable circuitry, logic and/or code that may enable wireless communication between the WMCD 103 and the Internet 207. In another embodiment of the invention, the cellular tower 205 may enable communication between the WMCD 103 and the Internet 207.

The travel website server 209 and the 2^{nd} travel website server 209A may comprise servers for travel agencies or similar entities that may be utilized to make travel arrangements, which may comprise airline reservations, hotel reservations or car rentals, for example.

In operation, the WMCD 103 may be utilized to create a PRA 101 with the objective of making travel arrangements for the WMCD user. In another embodiment of the invention, a user may create a PRA 101 from any suitable device capable of communicating to a network, such that the WMCD 103 may receive the results of the PRA 101. The user preferences, such as preferred airline, seating preference, meal preferences, as well as the user's schedule, may be stored in the WMCD 103 or remotely on the storage device 123 in the home network 121, for example. The preferences may be incorporated with the PRA 101 and thus may be communicated to an available remote resource, such as the processing device 125, for example, to perform the required task without using valuable computing resources or wireless usage of the WMCD 103.

The PRA 101 may query the travel website server 209 for available flight information and make reservations based on user preferences and scheduling requirements. Should no reasonable options exist at the travel website server 209, the PRA 101 may enable communication with another site, the 2^{nd} travel website server 209A, for further inquiries. In another embodiment of the invention, the PRA 101 may generate multiple smaller PRAs that may be communicated to different travel sites to report results back to the original PRA 101, that may then be communicated back to the WMCD 103 so that a user may accept or decline the various options that may be determined.

The PRA 101 may perform multiple functions, such as obtain suitable flight information, reserve a rental car and a hotel room, and make a reservation at a restaurant, for example, all of which may be determined based on user preferences. The requests, commands and/or responses may take many forms, such as text, speech, images or even simply a notification utilizing tones or vibration, for example.

In another exemplary embodiment of the invention, the travel website server 209 may comprise a server for booking passengers on flights in instances of flight cancellations at a particular airport, due to inclement weather, for example. A PRA 101 may be generated by the WMCD 103 for booking a flight for a user in instances when a flight may be cancelled. The user preferences may be incorporated with the PRA 101, which may then be communicated to a remote device, such as the processing device 125 in the home network 121, for example. The PRA 101 may be communicated via the cellular tower 205 and the Internet 207 or the wireless access point 203 and the Internet 207. In this manner, the PRA 101 may perform re-booking tasks from a device that may not be limited by communication bandwidth, as may be the case with multiple users on cell phones trying to make flight reservations. In instances where no flights are available, the PRA 101 may enable communication with another airline, such as the 2^{nd} travel website server 209A, based on preferences established with the original airline.

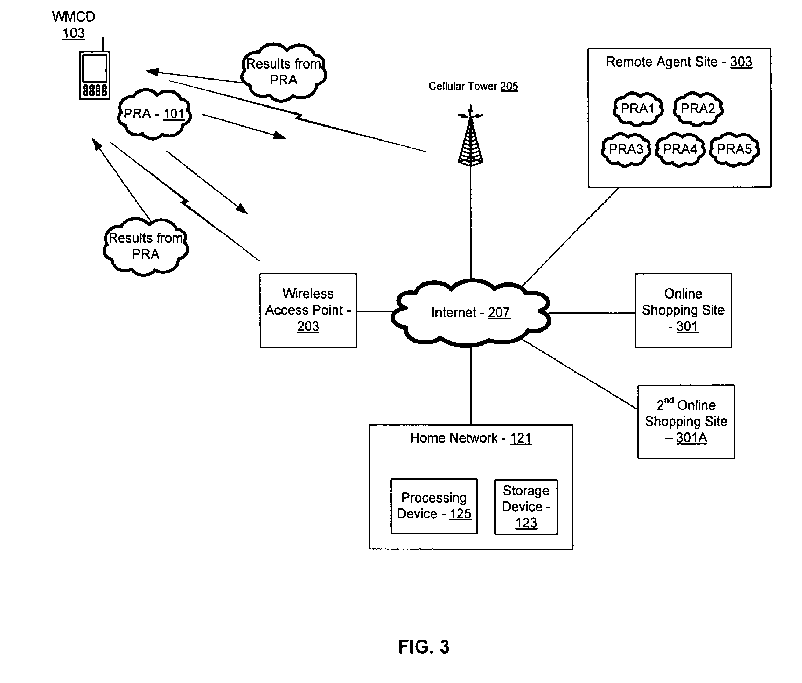

FIG. 3 is a block diagram of exemplary utilization of persistent remote agents for multiple users, in accordance with an embodiment of the invention. Referring to FIG. 3, there is shown the WMCD 103, the home network 121, the wireless access point 203, the cellular tower 205, the Internet 207, an online shopping site 301, a 2^{nd} online shopping site 301A and a remote agent site 303. The WMCD 103, the home network 121, the wireless access point 203 and the cellular tower 205 may be as described with respect to FIG. 2. The online shopping site 301 may comprise a website for a place of business or similar entity that may be utilized to purchase goods. The remote agent site 303 may comprise a server or similar hardware for storing of PRAs, PRAs 1-5, for example, from multiple users. In another embodiment of the invention, the remote agent site 303 may be a source of remote agents where services may be offered. For example, the remote agent site 303 may sell remote agents that may be utilized by users to obtain tickets, make reservations, obtain weather information, recording of programs, and/or areas of interest local to the WMCD 103.

In operation, the WMCD 103 may be utilized to generate a PRA 101 with the objective of purchasing an item online. Preferences such as purchase price, shipping details and item specifics may be stored locally on the WMCD 103 or remotely on the storage device 123 in the home network 121, for example, and may be incorporated with the PRA 101 to enable the purchase. The PRA 101 may enable communication with multiple online shopping sites to locate the best price or shortest delivery time, for example.

In an exemplary embodiment, a user of the WMCD 103 may be traveling and may wish to purchase computer equipment for a trade show they are attending, and as such may need delivery as soon as possible. User preferences such as the method of payment, including credit card information, shipping method, such as overnight delivery in this case, may be incorporated into the PRA 101, which may be communicated to the home network 121, stored in the storage device 123 and executed by the processing device 125. In another embodiment of the invention, the WMCD 103 and the PRA 101 may determine a time when the exchange of retrieved information may be carried out, or set times for a status update to be communicated to the WMCD 103.

The PRA 101 may query the online shopping site 301 to determine the price and availability of the desired item. The PRA 101 may also query the online shopping site 301A to determine the price and availability of the desired item. The PRA 101 may return the extracted information, listing options in order of desirability in terms of user preferences, such as fastest delivery first, and price as a secondary consideration. The user of the WMCD 103 may then select an appropriate item in the list and approve the purchase from the chosen source.

In another embodiment of the invention, the PRA 101 may be generated by the WMCD 103 and then may be communicated to the remote agent site 303. The remote agent site 303 may store multiple PRAs from multiple users, such as PRAs 1-5, and may be enabled to perform tasks as defined by the stored PRAs. The remote agent site 303 may comprise a site specifically for storing and executing user PRAs, and may enable the utilization of PRAs without the necessity of relying on a remote resource, such as the home network 121. Keeping the home network 121 operational may not be possible in instances when a user may be on travel, for example.

The PRAs stored on the remote agent site 303 may be distinguished by user and/or WMCD, such as the WMCD 103, and may be executed in a manner similar to when the PRA 101 may be stored in the home network 121. A user of the WMCD 103 may have an account established with the remote agent site 303, and this information may be incorporated into the PRA 101.

In an exemplary embodiment of the remote agent site 303 utilization, the WMCD 103 may generate the PRA 101 with the objective of purchasing items needed while traveling abroad. A PRA, such as the PRA 103 may be utilized to purchase the items online due to limited cellular coverage in the area of travel by the user of the WMCD 103. In addition, the home network 121 may have been switched off when the user left on travel, thus the need for the use of the remote agent site 303. The PRA 101 may be communicated to the remote agent site 303, which may then execute the PRA 101. The PRA 101 may query the online shopping site 301 to determine the price and availability of the desired item. The PRA 101 may also query the online shopping site 301 A to determine the price and availability of the desired item. The PRA 101 may return the extracted information to the remote agent site 303, which may store the extracted information until the WMCD 103 may again have wireless access. The results may then be communicated to the WMCD 103, listing options in order of desirability in terms of user preferences, such as capability of delivery to the area of travel. The user of the WMCD 103 may then select an appropriate item in the list and approve the purchase from the chosen source.

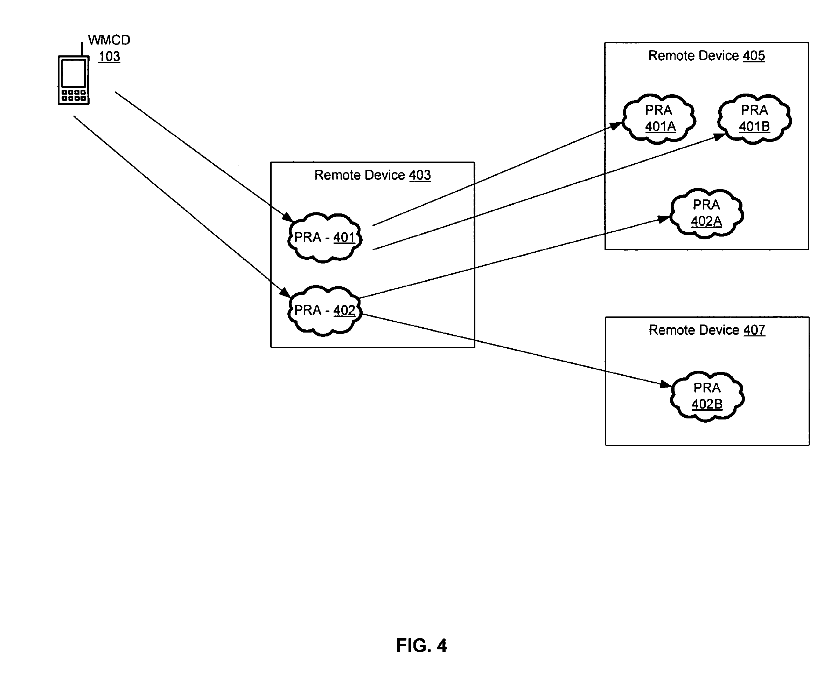

FIG. 4 is a block diagram of an exemplary generation of multiple persistent remote agents, in accordance with an embodiment of the invention. Referring to FIG. 4, there is shown the WMCD 103, remote devices 403, 405 and 407 and PRAs 401, 401A, 401 B, 403, 403A and 403B. The remote devices 403, 405 and 407 may comprise storage devices and/or servers that may store and/or execute PRAs.

In operation, the WMCD 103 may generate the PRA 401 and the PRA 402 and communicate them to the remote device 403. The remote device 403 may then spawn additional PRAs that may be communicated to additional remote devices. In an exemplary embodiment, the remote device 403 may spawn two PRAs, PRA 401A and the PRA 401 B, from the PRA 401, and communicate the PRAs 401A and 401 B to the remote device 405. The remote device 403 may also spawn additional PRAs, PRA 402A and PRA 402B, with the PRA 402A communicated to the remote device 405 and the PRA 402B communicated to the remote device 407.

In this manner, a specific task to be performed by an original PRA, such as the PRA 401, may be subdivided into sub-tasks, or may be expanded into further tasks, to be independently executed by one or more remote devices, such as the remote devices 405 and 407.

In an exemplary embodiment of the invention, the WMCD 103 may generate the PRA 401 to make travel arrangements for a user of the WMCD 103. The PRA 401 may be communicated to the remote device 403, which may comprise a travel agency website, for example. The remote device 403 may then generate the PRA 401A, which may be generated to make an airline reservation, and the PRA 401 B, which may be generated to make a car rental reservation, both of which may be communicated to the remote device 405, which in this embodiment of the invention may comprise a airline and rental car reservation site, for example. The PRA 401A and 401 B may each enable their respective tasks and the resulting reservation choices may be communicated back to the remote device 403, which may merge the results and communicate the reservation options back to the WMCD 103 for consideration by the user. The number of remote devices and/or PRAs is not limited to the number shown in FIG. 4. Accordingly, any number of remote devices and/or PRAs may be utilized.

In another embodiment of the invention, the WMCD 103 may generate the PRA 402 to make travel arrangements for a user of the WMCD 103. The PRA 402 may be communicated to the remote device 403, which may comprise a travel agency website, for example. The remote device 403 may then generate the PRA 402A, which may be generated to make an airline reservation, and communicate the PRA 402A to the remote device 405, which may comprise an airline website, for example. The remote device 405 may also generate the PRA 402B, which may be generated to make a car rental reservation, and communicate the PRA 402B to the remote device 407, which may comprise a rental car reservation site, for example. The PRAs 402A and 402B may each enable their respective tasks and the resulting reservation choices may be communicated back to the remote device 403, which may merge the results and communicate the reservation options back to the WMCD 103 for consideration by the user.

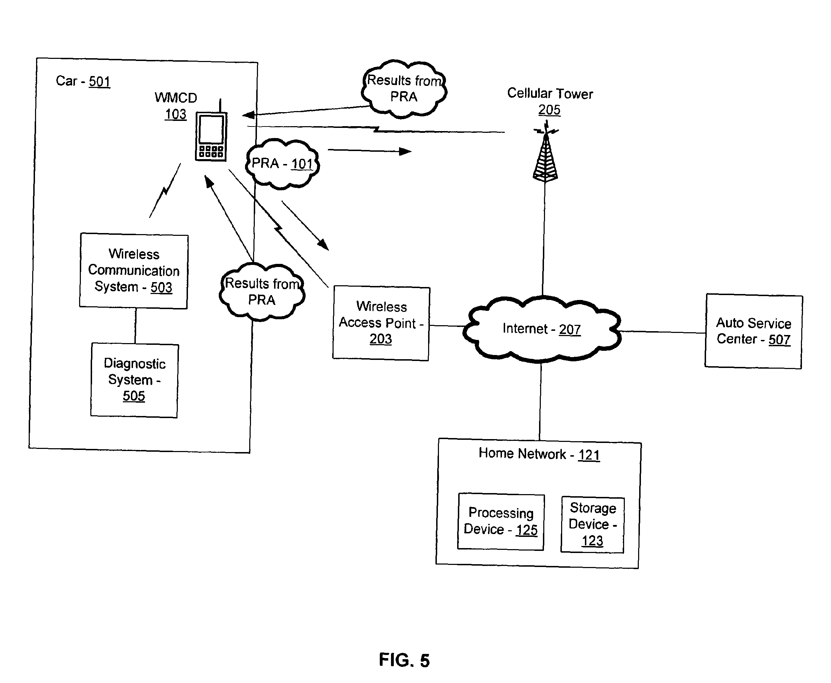

FIG. 5 is a block diagram of an exemplary utilization of persistent remote agents for auto emergency service, in accordance with an embodiment of the invention. Referring to FIG. 5, there is shown a car 501, the WMCD 103, the home network 121, the wireless access point 203, the cellular tower 205, the Internet 207 and an auto service center 507. The WMCD 103, the home network 121, the wireless access point 203 and the cellular tower 205 may be as described with respect to FIG. 2. The car 501 may comprise a wireless communication system 503 and a diagnostic system 505. The wireless communication system 503 may comprise suitable circuitry, logic and/or code that may enable communication between a wireless device, such as the WMCD 103, and devices within the car 501, such as the diagnostic system 505, for example. The wireless communication system 503 may be global positioning satellite (GPS) capable so that the WMCD 103 may incorporate position information when communicating remotely, such as to the auto service center 507. In another embodiment of the invention, the WMCD 103 may be GPS capable. The auto service center 507 may comprise a service station or similar business that may be contacted via the WMCD 103 or the home network 121 to provide service to the auto 501.

In operation, the WMCD 103 may be utilized to generate a PRA for contacting an available service station in instances where the car 501 may be inoperative. The WMCD 103 may communicate with the diagnostic system 505 via the wireless communication system 503 to determine the specific malfunction in the car 501. This information, along with the location of the car 501 and the user preferences, such as payment requirements and service station affiliations, for example, may be incorporated with the PRA 101. The PRA 101 may then be communicated to a remote device, such as the processing device 125 in the home network 121, for example. The PRA 101 may be communicated via the cellular tower 205 and the Internet or the wireless access point 203 and the Internet 207. In this manner, the wireless functions of the WMCD 103 may be utilized for other purposes, such as cellular calls notifying people of the car 501 malfunction, while the PRA 101 enables the notification of a service center, such as the auto service center 507.

By incorporating information from the diagnostic system 505 into the PRA 101, the availability of necessary parts may be verified before arranging with a particular service center, such as the auto service center 507. If parts may not be available at the auto service center 507, the PRA 101 may contact another service station, for example.

In another embodiment of the invention, the WMCD 103 may periodically communicate with the diagnostic system 505 via the wireless communication system when in the car 501. In instances when routine maintenance may be required or suggested for the car 501 as indicated by the diagnostic system 505, the WMCD 103 may generate a PRA 101 for setting up a scheduled service of the car 501 at a service center, such as the auto service center 507. Preferences may be stored locally in the WMCD 103 or remotely, such as in the storage device 123 in the home network 121, and may comprise preferred service stations, method of payment, the car 501 make and model, the user's schedule and pertinent information regarding the service to be performed.

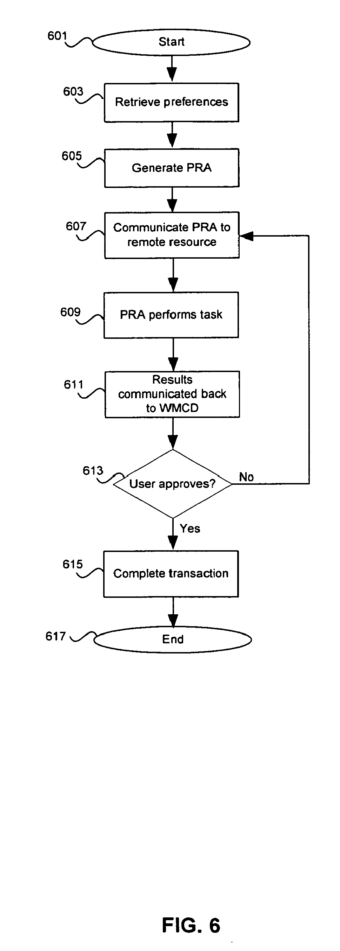

FIG. 6 is a flow diagram illustrating an exemplary persistent remote agent operation, in accordance with an embodiment if the invention. Referring to FIG. 6, after start step 601, in step 603, the WMCD 103 may receive user preferences as they pertain to the task to be performed. The user preferences may be stored locally in the WMCD 103 or remotely, such as on the storage device 123 in the home network 121, for example. In step 605, the WMCD 103 may generate the PRA 101, followed by step 607 where the PRA 101 may be communicated to a remote resource, such as the processing device 125 in the home network 121, for example. In step 609, the PRA 101 may perform the designated task without using valuable processing resources or wireless usage of the WMCD 103, followed by step 609 where the results of the PRA 101 task may be communicated back to the WMCD 103 for user approval. In step 613, if the user does not approve of the result, the process may jump back to step 607. If the user approves of the result, the exemplary process may proceed to step 615 to complete the transaction, followed by end step 617.

In an embodiment of the invention, a method and system are disclosed for wireless communication and may comprise generating via a wireless mobile communication device (WMCD) 103, one or more persistent remote agents (PRAs) 101, 401, 402 that are enabled to perform one or more tasks. The PRAs 101, 401 and/or 402 may be communicated to one or more remote devices 121 and/or 403 to perform the one or more tasks. The preferences of a user of the WMCD 103 may be incorporated into the PRAs 101, 401, 402, and may be stored internally or externally to the WMCD 103. The result of the tasks may be received by the WMCD 103 from the one or more remote devices 121 and 403. The PRAs 101, 401, 402 may be communicated from the WMCD 103 to the one or more remote devices 403, 405 and 407 via one of a plurality of wireless protocols. At least one additional PRA 401A, 401 B, 402A and/or 402B may be spawned from the PRAs 101, 401, 402 at the one or more remote devices 121 and 403, and may be communicated to one or more additional remote devices 405 and 407. At least one additional PRA 401A, 401 B, 402A and/or 402B may perform one or more additional tasks at the one or more additional remote devices 405 and 407. The WMCD 103 may receive additional results for the additional tasks from the additional PRAs 401A, 401B, 402A and/or 402B. The remote devices 121 and/or 403 may receive additional results for the additional tasks from the additional PRAs 401A, 401 B, 402A and/or 402B. The WMCD 103 may receive the additional results for the additional tasks from the additional PRAs 401A, 401 B, 402A and/or 402B at the remote devices 121 and/or 403. The tasks may be performed by the PRAs 101, 401 and/or 402 periodically. The WMCD 103 may communicate a message to the remote devices 121 and/or 403 to initiate performance of the tasks by the PRAs 101, 401 and/or 402. The PRAs 101, 401 and/or 402 may determine whether the remote devices 121 and/or 403 comprise available resources for handling execution of the PRAs 101, 401 and/or 402.

In an embodiment of the invention, a method and system are disclosed for wireless communication and may comprise generating via a wireless mobile communication device (WMCD) 103, a PRA (PRA) 101 for performing a specific task. The PRA 101 may be communicated to a remote device 125 with sufficient processing and communication bandwidth resources to accomplish the specific task. The WMCD 103 may incorporate user preferences into the PRA 101, and may be stored internal or external to the WMCD 103. The PRA 101 may be communicated from the WMCD 103 to the remote device 125 via one of a plurality of wireless protocols. The remote device 125 may be located within a home network 121 of the WMCD 125, and the specific task may be performed on a periodic basis.

Certain embodiments of the invention may comprise a machine-readable storage having stored thereon, a computer program having at least one code section for controlling a proxy device over a network by a remote device, the at least one code section being executable by a machine for causing the machine to perform one or more of the steps described herein.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for wireless communication, the method comprising:
generating via a wireless mobile communication device, one or more persistent remote agents that are enabled to perform one or more tasks; and
communicating said generated one or more persistent remote agents to one or more remote devices to perform said one or more tasks.

2. The method according to claim 1, comprising incorporating preferences of a user of said wireless mobile communication device into said generated one or more persistent remote agents.

3. The method according to claim 2, comprising storing said preferences on said wireless mobile communication device.

4. The method according to claim 2, comprising storing said preferences externally to said wireless mobile communication device.

5. The method according to claim 1, comprising receiving at said wireless mobile communication device, a result of said one or more tasks from said one or more remote devices.

6. The method according to claim 1, comprising communicating said one or more persistent remote agents from said wireless mobile communication device to said one or more remote devices via one of a plurality of wireless protocols.

7. A system for wireless communication, the system comprising:
one or more processors in a wireless mobile communication device that enable generation of one or more persistent remote agents that are enabled to perform one or more tasks; and
said one or more processors enable communication of said generated one or more persistent remote agents to one or more remote devices to perform said one or more tasks.

8. The system according to claim 7, wherein said one or more processors enable incorporation of preferences of a user of said wireless mobile communication device into said generated one or more persistent remote agents.

9. The system according to claim 8, wherein said one or more processors enable storage of said preferences on said wireless mobile communication device.

10. The system according to claim 8, wherein said one or more processors enable storage of said preferences externally to said wireless mobile communication device.
